Europäisches Patentamt

European Patent Office

Office européen des brevets

(19)

(11) Numéro de publication : **0 188 796**
**B1**

(12) **FASCICULE DE BREVET EUROPÉEN**

(45) Date de publication du fascicule du brevet :
19.10.88

(51) Int. Cl.⁴ : **B 23 K 3/04**

(21) Numéro de dépôt : 85116420.2

(22) Date de dépôt : 21.12.85

(54) **Appareil de soudage pour assembler un composant électrique à un support.**

(30) Priorité : 26.12.84 FR 8419955

(43) Date de publication de la demande :
30.07.86 Bulletin 86/31

(45) Mention de la délivrance du brevet :
19.10.88 Bulletin 88/42

(84) Etats contractants désignés :
DE GB NL SE

(56) Documents cités :
FR-A- 2 307 610
US-A- 3 475 814
US-A- 3 941 292

(73) Titulaire : **Farco S.A.**
**Rue Girardet 29**
**CH-2400 Le Locle (CH)**

(72) Inventeur : **Müller, Claude**
**Communal 6**
**CH-2400 Le Locle (CH)**
Inventeur : **Matthey-Doret, Fernand**
**Communal 16**
**CH-2400 Le Locle (CH)**

(74) Mandataire : **Gresset, Jean et al**
**ICB Ingénieurs Conseils en Brevets SA Passage**
**Max. Meuron 6**
**CH-2001 Neuchâtel (CH)**

EP 0 188 796 B1

## Description

La présente invention a pour objet un appareil de soudage pour assembler un composant électrique comportant des bornes à un support comportant des pistes conductrices, par soudage des bornes et des pistes superposées deux à deux.

Plus précisément, cet appareil comprend un socle, un outil de soudage comportant un châssis, une masse pouvant occuper plusieurs positions, un générateur électrique et une tête de soudage, et une embase montée sur le socle et destinée à supporter et à positionner le support et le composant. Dans cet appareil l'outil de soudage est monté basculant sur le socle, autour d'un axe horizontal.

Un appareil de ce type est décrit dans le document FR-A-2 307 610.

En plus des caractéristiques définies ci-dessus, cet appareil comporte un dispositif de commande muni d'une pédale, d'un ressort de rappel et d'un câble, agencés de façon que le ressort maintienne l'outil en position relevée, à moins qu'une pression sur la pédale, annulant la force de traction du ressort, libère le câble et autorise la descente de l'outil.

Ce dispositif de commande est relativement complexe. Il rend l'appareil peu mobile. En outre, en cas de rupture du câble ou du ressort, l'outil risque de s'abattre sur la pièce à assembler ou, ce qui peut être plus grave, sur le doigt du manipulateur.

Le but de la présente invention est de réaliser un appareil de soudage simple, robuste, sûr et économique. Ce but est atteint grâce aux caractéristiques particulières que présente l'appareil de la revendication 1.

Grâce à cette configuration particulière, il est possible de réaliser un appareil de soudage particulièrement économique, robuste et de manipulation facile.

L'invention sera mieux comprise grâce à la description qui va suivre, faite en référence aux dessins parmi lesquels :

- la figure 1 représente une vue en perspective d'un appareil selon l'invention ;

- la figure 2 est une vue en élévation de l'appareil de la figure 1 ; et

- la figure 3 représente la partie de l'appareil par laquelle s'effectue l'opération de soudage.

L'appareil de soudage représenté aux figures comporte un socle 10, un outil de soudage 12 muni d'un châssis 14, d'un générateur électrique 16, de moyens de commande 17 et d'une tête de soudage 18 à chauffage par effet Joule, et une embase 20 solidaire du socle 10 et destinée à supporter un circuit imprimé 22 comportant des pistes conductrices 24 et un composant électrique 26 muni de bornes 28 à souder sur le circuit 22.

L'outil de soudage 12 est rendu solidaire du socle 10 par l'intermédiaire d'une articulation 30 à axe horizontal 32 au moyen de laquelle il est monté basculant sur ce socle. Cette articulation est composée d'une chape verticale 34 entre les branches de laquelle est montée une plaque 36 fixée au châssis 14. Un arbre 38 est engagé dans ces pièces qu'il supporte par l'intermédiaire de paliers (non représentés). Le débattement de l'articulation vers l'arrière de l'appareil est limité par une butée 40 qui est solidaire de la chape 34.

Une masse 44 est montée dans le châssis 14 de manière à pouvoir se déplacer longitudinalement dans celui-ci. A cet effet, une tige 46 traverse le châssis longitudinalement en passant dans la masse 44. Celle-ci est munie d'une poignée 48 qui s'étend à l'extérieur du châssis 14 de manière que la masse puisse être déplacée à la main. La course vers l'avant de l'appareil est limitée par une butée réglable 50 coulissant sur la tige 46 et pouvant être bloquée sur celle-ci par une vis 52. La course vers l'arrière est limitée par la paroi arrière du châssis 14 ou par une butée fixe non représentée au dessin.

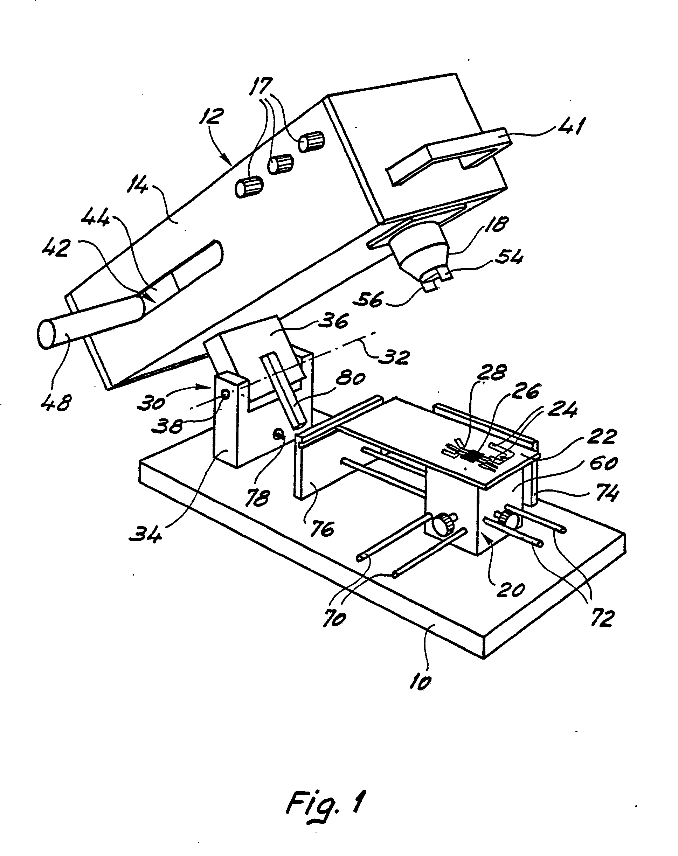

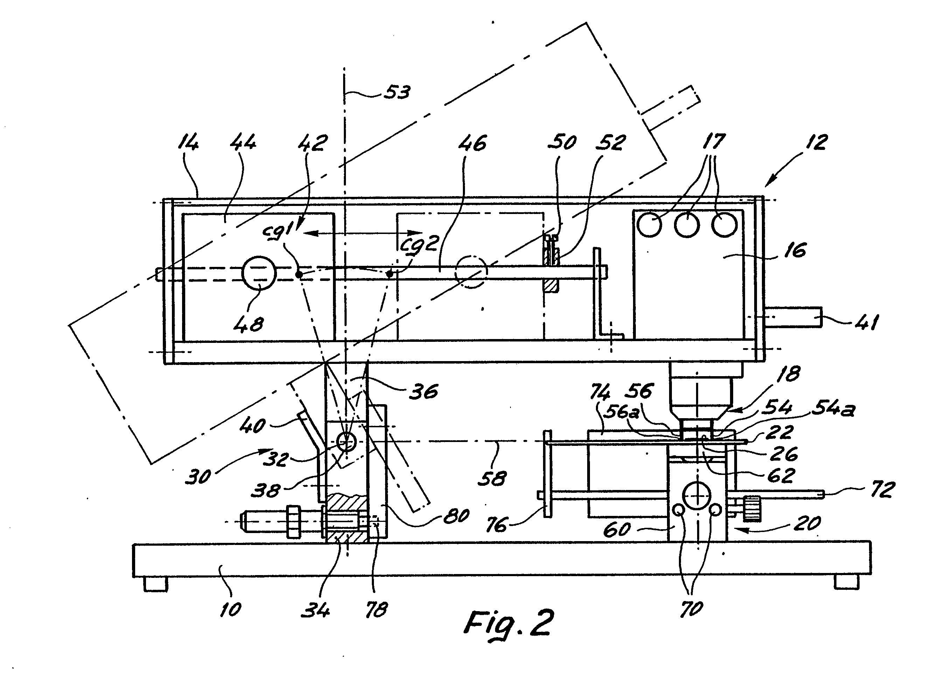

Lorsque la masse 44 se trouve dans cette dernière position, il est souhaitable que l'outil de soudage 12 ait une position stable aussi bien lorsqu'il est incliné (fig. 1 et trait mixte fig. 2), c'est-à-dire en position de dégagement de la zone de travail, que horizontal (trait plein fig. 2), c'est-à-dire en position de travail.

Pour réaliser cette double condition, il faut que les deux positions extrêmes $cg_1$, $cg_2$ qu'occupe .le centre de gravité de l'outil 12 se trouvent à l'arrière respectivement à l'avant du plan vertical 53 passant par l'axe 32, selon que l'outil est incliné ou horizontal (fig. 2). Ce résultat est obtenu par le choix judicieux de l'endroit où la plaque 36 est fixée au châssis 14.

Lorsque la masse 44 est déplacée vers l'avant, elle engendre une pression de la tête de soudure d'autant plus grande que la masse est avancée. Il en résulte en définitive que la butée 50 détermine cette pression avec une précision suffisante pour le genre de soudages à accomplir.

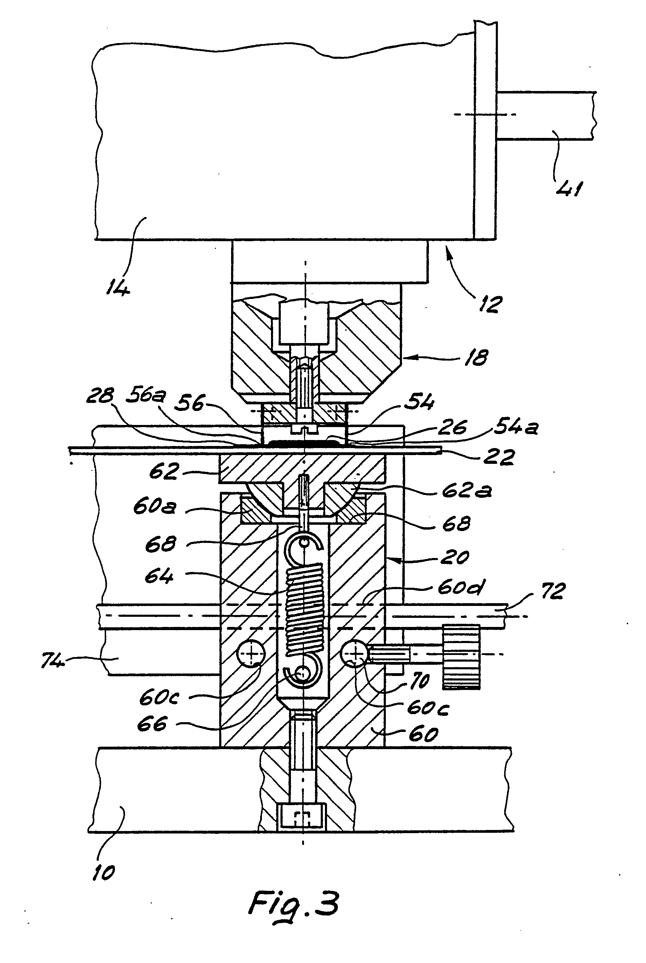

Ainsi qu'on peut le voir de manière plus précise sur la figure 3, la tête de soudage 18 comporte deux lames 54 et 56, parallèles entre elles et sensiblement perpendiculaires à la face inférieure du châssis 14. Ces deux lames 54 et 56 sont couplées au générateur de chaleur 16. De façon plus précise mais non représentée aux figures, ces lames sont reliées au secondaire d'un transformateur et chauffées ainsi par effet Joule. Leurs tranches inférieures 54a et 56a entrent en contact avec les bornes 28 du composant électrique 26, pour les souder aux pistes conductrices 24. Ces tranches définissent un plan 58, représenté en traits mixtes à la figure 2. Avantageusement, la tête de soudage 18 est positionnée de manière que le plan 58 passe· par l'axe 32. En outre, l'embase est dimensionnée de manière qu'un plan défini par les surfaces supérieures des bornes 28 passe également par l'axe 32 et soit ainsi confondu avec le plan 58 lors de l'opération de soudage. Cette condition n'est toutefois pas indispensable ; la tête et le plateau peuvent ainsi se trouver plus haut ou plus bas, à la condition que les cylindres virtuels centrés sur l'axe 32 et respectivement tangents au plan 58 passant par les tranches 54a et 56a des lames et au plan défini par la face supérieure des bornes soient confondus.

Ainsi qu'on peut le voir de manière plus précise sur la figure 3, l'embase comporte un pied 60 solidaire du socle 10 et dans la partie supérieure duquel est logée une calotte sphérique inversée 60a. Le pied 60 porte un plateau 62 destiné à supporter le circuit imprimé 22. Le plateau 62 comporte dans sa partie inférieure 62a une bague à surface inférieure sphérique convexe reposant dans la calotte 60a du pied, pour former avec elle une rotule. Un ressort à boudin 64, accroché par l'une de ses extrémités à un doigt 66 que comporte le pied 60 et à l'autre à une boucle 68 que comporte le plateau 62, garantit une bonne stabilité de ce dernier.

Le fait que le plateau 62 soit solidaire du pied 60 par l'intermédiaire d'une rotule permet de rattraper les décalages entre les deux plans définis plus haut, sans perturber les conditions de travail.

Le pied 60 comporte en outre des trous 60c et 60d, dans lesquels sont engagées des tiges 70, 72 portant respectivement des plaques 74 et 76 verticales et orthogonales entre elles et avec le socle 10, destinées à positionner le circuit imprimé 22 dans le plan horizontal (fig. 1 et 2).

Comme on peut le voir plus précisément sur la figure 2, l'appareil comporte en outre un amortisseur pneumatique 78 qui coopère avec un levier 80 solidaire de la plaque 36 de l'articulation 30. Cet amortisseur 78 a pour but de ralentir le mouvement de l'outil de soudage 12 lorsque la tête 18 s'approche du circuit imprimé 22 et du composant électrique 26 afin d'éviter d'abîmer ou de déplacer ces derniers.

Avant d'effectuer l'opération de soudage proprement dite, les pistes conductrices 24 sont enduites de fondant, puis le composant électrique 26 est placé et positionné sur le circuit imprimé 22, en alignant les bornes 28 et les pistes 24. La pratique a montré que la présence de fondant suffit à maintenir le composant 26 en place sur le circuit imprimé 22, jusqu'à ce que ce dernier soit positionné sur l'embase 20. L'opération de soudage proprement dite peut alors commencer. L'opérateur abaisse l'outil de soudage 12, au moyen de la poignée 41. Ce déplacement se fait librement, jusqu'à ce que le levier 80 entre en contact avec le piston du frein 78. Dès cet instant, le mouvement est ralenti, puis stoppé lorsque les lames 54 et 56 entrent en contact avec les bornes 28. L'opérateur déplace alors la masse 44 au moyen de la poignée 48, pour augmenter la pression des lames 54 et 56, et enclenche le générateur 16 en actionnant les moyens de commandes 17. Dès que l'opération de soudage est terminée, l'opérateur ramène la masse 44 vers l'arrière et relève l'outil de soudage 12. Le circuit imprimé 22 et le composant 26 soudés l'un à l'autre peuvent être retirés. L'appareil est alors prêt pour une nouvelle opération. Dans le cas d'une soudure à l'étain-plomb, cette opération est avantageusement effectuée en chauffant les lames 54 et 56 à une température comprise entre 250 et 300°, en appliquant sur les bornes et les pistes superposées une pression de l'ordre 50 à 300 grammes par piste, l'opération de soudage ayant une durée comprise entre une et cinq secondes.

L'exemple décrit l'assemblage d'un composant électrique sur un circuit imprimé. Il est bien évident que les termes de composant électrique et de circuit imprimé sont à prendre dans un sens large. Ainsi, le circuit imprimé peut être remplacé par n'importe quel support comportant les pistes conductrices. Par ailleurs, le composant électrique pourrait être un circuit intégré, mais aussi une cellule d'affichage, des cellules photo-électriques, etc.

Par ailleurs, l'appareil décrit peut être rendu plus performant en automatisant l'outil de soudage, par des moyens électriques, hydrauliques ou pneumatiques, ces moyens pouvant en outre générer la pression lors de l'opération de soudage.

Dans la description, la tête de soudage n'est équipée que de deux lames. Il est bien évident qu'elle peut sans autre en porter quatre, dès lors que le composant comporte des bornes sur ses quatre côtés.

Cet appareil peut aussi sans autre être transformé en appareil de désoudage, en associant à l'extrémité de l'outil 12 voisin de la tête 18 des moyens de préhension du composant, qui permettent de l'arracher du circuit imprimé en retirant l'outil de soudage dont la tête est encore chaude.

**Revendications**

1. Appareil de soudage pour assembler un composant électrique (26) comportant des bornes (28) à un support (22) comportant des pistes conductrices (24) par soudage des bornes (28) et des pistes (24) superposées deux à deux, qui comprend :
   - un socle (10)
   - un outil de soudage (12), monté basculant sur ledit socle (10) autour d'un axe horizontal (32), pouvant ainsi occuper une position abaissée, de travail, et une position relevée, de repos, comportant un châssis (14), une masse (14) mobile, un générateur électrique (16) et une tête de soudage (18) ;
   - une embase (20) montée sur ledit socle (10) et destinée à supporter et à positionner ledit support (22) et ledit composant (26) par rapport à ladite tête (18), caractérisé en ce que ladite masse peut coulisser librement sur le châssis selon une direction sensiblement horizontale, lorsque le châssis est en position abaissée, et occuper deux positions extrêmes, pour permettre un déplacement du centre de gravité dudit outil selon une direction perpendiculaire audit axe (32), la masse et le châssis étant agencés de manière que le centre de gravité du châssis se situe au-dessus de l'axe et entre l'axe et la tête lorsque le châssis est en position abaissée et la masse dans sa position extrême voisine de l'outil, et en ce que le centre de gravité se trouve au-dessus et au-delà dudit axe, en regard de la tête lorsque le châssis est relevé et la masse dans sa seconde position extrême, éloignée de l'outil.

2. Appareil selon la revendication 1, caractérisé en ce que ledit châssis (14) porte en outre une butée (50) réglable, limitant le déplacement de ladite masse (44) vers l'avant et permettant d'ajuster la pression de celle-ci (18) sur lesdites pistes (24) et lesdites bornes (28) superposées.

3. Appareil de soudage selon l'une des revendications 1 et 2, dans lequel la tête de soudage (18) comporte au moins deux lames (54 et 56) dont la tranche (54a, 56a) entre en contact avec lesdites bornes (28) et lesdites pistes (24) superposées, lesdites tranches (54a, 56a) se trouvant dans un même plan (58), caractérisé en ce que ledit axe (32) est aussi compris dans ce plan (58).

4. Appareil de soudage selon l'une quelconque des revendications 1 à 3, caractérisé en ce que ladite embase (20) comporte un plateau (62) relié au socle (10) par une rotule (60a, 62a).

5. Appareil de soudage selon l'une quelconque des revendications 1 à 4, caractérisé en ce que l'outil de soudage (12) coopère avec un amortisseur (78) destiné à ralentir le mouvement dudit outil (12) lorsque la tête de soudage (18) se trouve au voisinage du composant électrique (26).

**Claims**

1. Welding apparatus for assembling an electric component (26) having terminals (28) to a support (22) having strip conductors (24) by welding the terminals (28) and strips (24) superimposed in pairs, comprising :
- a base (10)
- a welding tool (12) swing mounted on said base (10) about an horizontal axis (32) permitting it to occupy a lowered working position and a raised rest position having a chassis (14), a movable sledge (14), an electric generator (16) and a welding head (18) ;
- a pillar (20) mounted on said base (10) and adapted to support and position said support (22) and said component (26) with respect to said head (18), characterized in that said sledge can slide freely on the chassis along a substantially horizontal direction when the chassis is in the lowered position, and occupy two extreme positions to enable displacement of the centre of gravity of said tool along a direction perpendicular to said axis (32), the sledge and the chassis being disposed in such a manner that the centre of gravity of the chassis is situated above the axis and between the axis and the head when the chassis is in the lowered position and the sledge in its extreme position near to the tool and in that the centre of gravity is above and on the other side of said axis, with respect to said head when the chassis is raised and the sledge in its second extreme position, away from the tool.

2. Apparatus according to claim 1, characterized in that said chassis (14) also has an adjustable stop (50) limiting movement of said sledge (44) towards the forward position and permitting adjustment of the pressure of the latter (18) on said strips (24) and said superimposed terminals (28).

3. Welding apparatus according to either of claims 1 and 2 in which the welding head (18) has at least two blades (54 and 56), the edge (54a and 56a) of which enters into contact with said terminals (28) and said superimposed strips (24), said edges (54a, 56a) being in the same plane (58) characterized in that said axis (32) also falls in this plane (58).

4. Welding apparatus according to any one of claims 1 to 3, characterized in that said pillar (20) comprises a platform (62) linked to the base (10) by a pivot pin (60a, 62a).

5. Welding apparatus according to any one of claims 1 to 4, characterized in that the welding tool (12) cooperates with a shock absorber (78) adapted to retard the movement of said tool (12) when the welding head (18) is in the vicinity of the electrical component (26).

**Patentansprüche**

1. Schweissapparat zum Zusammenfügen eines mit Klemmen (28) versehenen elektrischen Bestandteils (26) an einen mit leitenden Bahnen versehenen Träger (22) durch Verschweissen der Klemmen (28) und der paarweise übereinander angeordneten Bahnen (24), umfassend :
- einen Grundplatte (10)
- ein Schweisswerkzeug (12), dass um eine waagerechte Achse (32) kippbar auf der genannten Grundplatte (10) montiert ist und dadurch eine abgesenkte Arbeits-Stellung und eine hochgezogene Ruhe-Stellung einnehmen kann, umfassend ein Gestell (14), eine bewegliche Masse (44), einen elektrischen Generator (16) und einen Schweisskopf (18) ;
- einen Sockel (20), der auf der genannten Grundplatte (10) montiert und dazu bestimmt ist, den genannten Träger (22) und das genannte Bestandteil (26) in bezug auf den genannten Kopf (18) abzustützen und zu positionieren, dadurch gekennzeichnet, dass die genannte Masse auf dem genannten Gestell gemäss einer horizontalen Richtung frei verschiebbar ist, wenn das Gestell in der abgesenkten Stellung ist, und zwei Endlagenstellungen einnehmen kann, um eine Verschiebung des Schwerpunktes des genannten Werkzeugs gemäss einer rechtwinklig zur genannten Achse (32) verlaufenden Richtung zu gestatten, wobei die Masse und das Gestell so ausgelegt sind, dass der Schwerpunkt des Gestells sich oberhalb der Achse und zwischen der Achse und dem Kopf befindet, wenn das Gestell in abgesenkter Stellung ist und die Masse sich in ihrer werkzeugseitigen Endlage befindet, und dadurch, dass der Schwerpunkt sich oberhalb und hinter der genannten Achse befindet, wenn das Gestell hochgezogen ist und die Masse sich in ihrer zweiten, dem Werkzeug entgegengesetzten Endlage befindet.

2. Gerät gemäss Anspruch 1, dadurch gekennzeichnet, dass das genannte Gestell (14) ferner einen einstellbaren Anschlag (50) trägt, der die Verstellung der genannten Masse (44) nach vorn begrenzt und dadurch gestattet, den auf die übereinanderliegenden genannten Bahnen (24) und genannten Klemmen (28) wirkenden Druck des Schweisskopfes (18) zu justieren.

3. Schweissgerät gemäss einem der Ansprüche 1 und 2, in welchem der Schweisskopf (18) mindestens zwei Klingen (54 und 56) umfasst, deren Stirnkanten (54a, 56a) mit den übereinanderliegenden genannten Klemmen (28) und genannten Bahnen (24) in Berührung treten, wobei sich die genannten Stirnkanten (54a, 56a) in einer selben Ebene (58) befinden, dadurch gekennzeichnet, dass die genannte Achse (32) sich ebenfalls in dieser Ebene (58) befindet.

4. Schweissgerät gemäss einem beliebigen der Ansprüche 1 bis 3, dadurch gekennzeichnet, dass der genannte Sockel (20) einen mit der Grundplatte (10) über ein Kugelgelenk (60a, 62a) verbundenen Teller (62) umfasst.

5. Schweissgerät gemäss einem beliebigen der Ansprüche 1 bis 4, dadurch gekennzeichnet, dass das Schweisswerkzeug (12) mit einem Dämpfungselement (78) zusammenarbeitet, das die Verlangsamung der Bewegung des genannten Werkzeugs (12) bewirkt, wenn sich der Schweisskopf (18) in der Nähe des elektrischen Bestandteils (26) befindet.

0 188 796

Fig. 1

1

Fig. 2

0 188 796

Fig.3